(19)

Europäisches
Patentamt

European
Patent Office

Office européen
des brevets

(11) **EP 4 636 612 A1**

(12) **EUROPEAN PATENT APPLICATION**

(43) Date of publication:
    **22.10.2025   Bulletin 2025/43**

(51) International Patent Classification (IPC):
    **G06F 16/9032** (2019.01)

(21) Application number: **24171079.7**

(22) Date of filing: **18.04.2024**

(52) Cooperative Patent Classification (CPC):
    **G06F 16/90332**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(71) Applicant: **Siemens Aktiengesellschaft
    80333 München (DE)**

(72) Inventor: **Awais, Muhammad Usman
    54000 Lahore (PK)**

(74) Representative: **Siemens Patent Attorneys
    Postfach 22 16 34
    80506 München (DE)**

(54)    **FACILITATED FETCHING AND USING SILOED DATA IN AN AUTOMATION ENVIRONMENT**

(57)    The invention relates to a method for fetching and using siloed data in an automation environment. To facilitate fetching and using siloed data in an automation environment, the following steps are suggested:
• receiving natural language input (120A) indicative of fetching data sets (122A, 122B) stored in at least two separate repositories (124A, 124B);
• extracting at least two fetch parameters (126A, 126B)

according to configurable parameter types (128A, 128B) from the received input (120A);
• fetching the data sets (122A, 122B) corresponding to the respective, extracted fetch parameter (126A, 126B) from repositories (124A, 124B); and
• storing the respective, fetched data set (122A, 122B) in a data storage (130).

FIG 1

EP 4 636 612 A1

# EP 4 636 612 A1

**Description**

**Technical Field**

The present disclosure is directed, in general, to fetching and using siloed data in an automation environment. Systems to handle such siloed data, esp. to fetch and use siloed data in an automation environment, are collectively referred to herein as product systems.

**Background Art**

Data silos are a common problem in the manufacturing industry. The issue arises when different departments, teams, and production lines operate independently and rely on different systems due to their differing needs, resulting in fragmented views of data. This structure breeds information silos, which are collections of data held by one group that is not easily or fully accessible by other groups in the same organization. As a result, data silos create barriers to information sharing and collaboration across departments, and data quality often suffers due to inconsistencies in data that may overlap across silos. Siloed data is also hard for leaders to get a holistic view of company data, which is not healthy data.

**Summary of Invention**

Variously disclosed embodiments include methods and computer systems that may be used to facilitate fetching and using siloed data in an automation environment.

According to a first aspect of the invention, a computer-implemented method may include:

- receiving natural language input indicative of fetching data sets in at least two separate repositories;
- extracting at least two fetch parameters according to predefined parameter types from the received input;
- fetching the data sets corresponding to the respective, extracted fetch parameter from repositories; and
- storing the respective, fetched data set in a data store.

According to a second aspect of the invention, a computer system may be arranged and configured to execute the steps of this computer-implemented method according to the first aspect.

According to a third aspect, a computer program product may include computer program code that, when executed by the computer system according to the second aspect, causes the computer system to carry out the method according to the first aspect.

According to a fourth aspect, a computer-readable medium may include the computer program product according to the third aspect. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis facilitating fetching and using siloed data in an automation environment or for carrying out the same purposes of the present disclosure.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

Embodiments will be described below in greater detail.

**Brief Description of the Drawings**

Figs. 1-7    depict a functional block diagram of an example systems that facilitate fetching and using siloed data in an automation environment in a product system, respectively.

Fig. 8    depicts a flow diagram of an example methodology that facilitates fetching and using siloed data in an automation environment in a product system.

Fig. 9    illustrates an embodiment of an artificial neural network which may be used in the context of fetching and using siloed data in an automation environment in a product system.

Fig. 10       depicts a block diagram of a data processing system in which an embodiment can be implemented.

**Detailed Description**

Various technologies that pertain to systems and methods for fetching and using siloed data in an automation environment in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

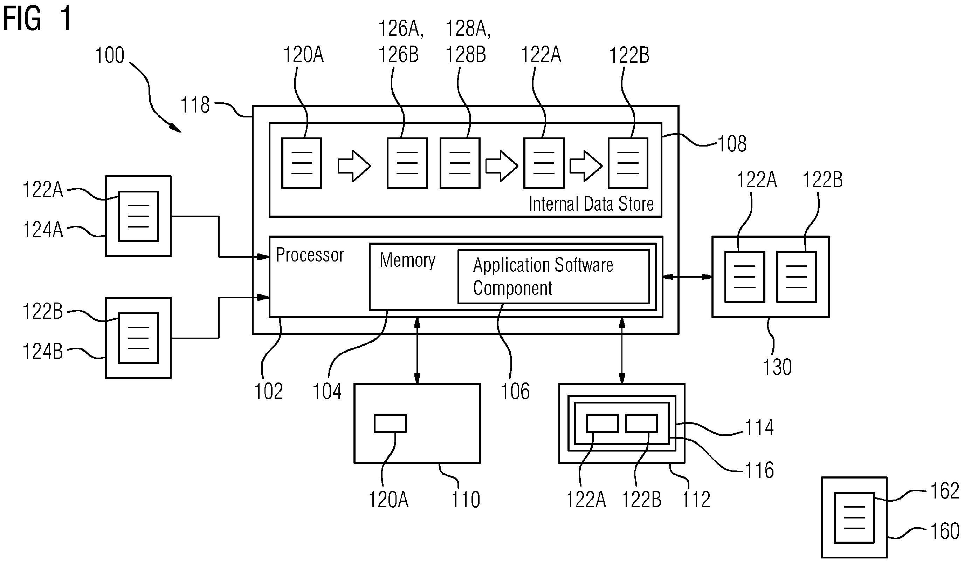

With reference to Fig. 1, a functional block diagram of a first example computer system or data processing system 100 is depicted that facilitates fetching and using siloed data in an automation environment. The processing system 100 may include a data silo copilot (DSC) system 118 which may, in some examples, may include at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may include and/or correspond to one or more components of an application for facilitating fetching and using siloed data in an automation environment, wherein the application software component 106 may, e.g., be configured to generate and store product data in a data store 108 such as a database.

By way of example, the DSC system 118 may be cloud-based, internet-based and/or be operated by a provider providing support for facilitating fetching and using siloed data in an automation environment. In some examples, the user may be located close to the DSC system 118 or remote from the DSC system 118, e.g., anywhere else, e.g., using a mobile device for connecting to the DSC system 118, e.g., via the internet, wherein the mobile device may include an input device 110 and a display device 112. By way of example, a speaker may be used alternatively or additionally to the display device 112 to communicate information to a user. In some examples, the DSC system 118 may be installed and run on a user's device, such as a computer, laptop, pad, on-premises computing facility, or the like.

It should be appreciated that fetching and using siloed data in an automation environment may be a challenging and time-consuming process which may require highly skilled engineers with many years of training. For example, large industrial complexes have thousands or even millions of electronic components working under one roof if Internet of Things (IoT) or Industrial IoT (IIot) devices are also included. There are logs generated from many of these devices, but it is a tedious job to understand the status codes and error codes appearing in the logs, e.g., because of the large amounts and formats of data or as each component may have a separate set of documentation. Hence, the information which is available in the industrial complexes is siloed and therefore often not available for optimized use corresponding automation environments.

To enable the enhanced fetching and using siloed data in an automation environment, the described product system or processing system 100 may include at least one input device 110 and at least one display device 112 (such as a display screen) or at least one speaker. The described processor 102 may be configured to generate a graphical user interface (GUI) 114 through the display device 112. Such a GUI 114 may include GUI elements such as buttons, links, search boxes, lists, text boxes, images, scroll bars usable by a user to provide inputs through the input device 110 that cause fetching and using siloed data in an automation environment. By way of example, the GUI 114 may include an DSC user interface (UI) 116 provided to a user.

In an example embodiment, e.g., for fetching and using siloed data in an automation environment, the application software component 106 and/or the processor 102 may be configured to receive natural language input 120A indicative of fetching data sets 122A, 122B stored in at least two separate repositories 124A, 124B.

The natural language input 120A may include, e.g., input information provided in a human language which is used by humans to convey meaning in spoken and written forms or through sign languages. Accordingly, the natural language input 120A may, e.g., be provided by a human user orally, in text or sign form. The input device 110 may, e.g. include a microphone, a computer keyboard, a smart phone, a camera, or the like to receive the provided natural language input 120A. In some examples, the natural language input 120A may be recorded and be forwarded to the DSC system 118.

The natural language input 120A may, e.g., indicate the user's intent of fetching a first data set 122A from a first repository 124A and a second data set 122B from the second repository 124B.

In further examples, a plurality of data sets 122C, 122D, ... may be available in a plurality of repositories 124C, 124D, ..., wherein the user may be interested in fetching these data sets 122C, 122D, ... as well. By way of example, the user may want to fetch all or selected data available in one or more of the repositories 124. In other examples, the user may want to fetch selected data sets 122, wherein the user may, in some examples, not be aware of where these data sets 122 are stored. Further, by way of example, the various data sets 122 may be stored in at least two different data types or data formats, in some examples, in a plurality of different data types or data formats.

In some examples, the application software component 106 and/or the processor 102 may further be configured to extract at least two fetch parameters 126A, 126B according to configurable parameter types 128A, 128B from the received input 120A.

The types of the first fetch parameter 126A for the first data set 122A from the first repository 124A and of the second fetch parameter 126B for the second data set 122B from the second repository 124B may be defined beforehand and may, e.g., indicate the data type or data format which the respective data set 122A, 122B shall have. Hence, the respective fetch parameter types 128 may, in some examples, contribute to correctly identify the respective data set 122 which the user intends to fetch, or contribute to correctly interpret the respective data set 122.

In some examples, the received natural language input 120A may include information on the respective fetch parameter 126 so that the respective fetch parameter 126 may be derived or extracted, e.g. with the aid of a natural language processing (NLP) tool, from the received natural language input 120A. Herein, a NLP tool may, e.g., use either rule-based or probabilistic (i.e. statistical and, most recently, neural network-based) machine learning approaches, wherein the tool may be capable of understanding the content of the received natural language input 120A. In some examples, the NLP tool may involve natural-language understanding and optionally speech recognition. Such NLP tools are currently available from various vendors and include, e.g., large language models (LLM), such as the GPT (generative pre-trained transformer) series of models of OpenAI from San Francisco, California, USA. It should be appreciated that the DSC system 118 may, e.g., include the functionalities of LLMs or a chatbot to provide the functionalities required for the suggested approach. Herein, LLMs may, e.g., be a mixture of multilayer perceptron (MLP) layers and transformer layers which is explained in more detail in the articles "Large Language Models for Mathematicians" by Simon Frieder, Julius Berner, Philipp Petersen, Thomas Lukasiewicz (cf. https://doi.org/10.48550/arXiv.2312.04556) and "A mathematical perspective on Transformers" by Borjan Geshkovski, Cyril Letrouit, Yury Polyanskiy, Philippe Rigollet (cf. https://doi.org/10.48550/arXiv.2312.10794). In some examples, such a chatbot using one or more LLMs may also be used for providing further functionalities of the DSC system 118 as explained below.

By way of example, the respective configurable parameter type 128A, 128B may be available in the internal data store 108 or the data storage 130, wherein the respective configurable parameter type 128A, 128B may, e.g., be received by the user or from another data source, e.g., via an API (application programming interface). In some examples, default types may be provided for the respective configurable parameter type 128A, 128B, e.g., for typical scenarios of devices 138 in an automation system 140, such as for an electric motor: an identifier, a physical observable 136 (e.g., rotational speed, power consumption, electrical voltage or current, etc.), and optionally further documentation 140, as is explained in more detail below. Similar default types may be defined for other devices 138 in an automation system 140 and respective typical scenarios.

For example, if the user asks the DSC system 118 "How hot are the different conveyor drives in my factory and what are the conveyor statuses?", a first fetch parameter type 128A may include an identifier (e.g., a name) and a temperature (e.g., in °C) for the respective conveyor drive of the factory, and a second fetch parameter type 128B may include an identifier (e.g., a name) and an operation status of the conveyor(s). Herein, the corresponding first data set 122A may be available in a PLC (i.e., a programmable logic controller) of the factory corresponding to the first repository 124A, and the corresponding second data set 122B may be available in a manufacturing execution system (MES) of the factory corresponding to the second repository 124B. Herein, the respective conveyor, conveyor drive, PLC or MES may be understood as a respective device 138, such as an automation device of an automation system 140, which is explained below in more detail.

In further examples, the application software component 106 and/or the processor 102 may further be configured to fetch the data sets 122A, 122B corresponding to the respective, extracted fetch parameter 126A, 126B from repositories 124A, 124B.

The first data set 122A may then be fetched, e.g. retrieved, communicated or downloaded, from the first repository 124A, wherein the second data set 122B may correspondingly be fetched from the second repository 124B. Herein, in some examples, the respective fetch parameter 126A, 126B may be used to identify and/or fetch the respective data set 122A, 122B.

By way of example, the application software component 106 and/or the processor 102 may further be configured to store the respective, fetched data set 122A, 122B in a data storage 130.

The respective fetched data set 122A, 122B may then be stored in the data storage 130, such as a such as a database, wherein the data storage 130 may, e.g., be included in the DSC system 118. In further examples, the data storage 130 may correspond to the internal data store 108. In yet further examples, the data storage 130 may be included by the user's end device or may be cloud-based or internet-based, wherein the user may be able to access the data storage 130.

The approach described for first data set 122A and the second data set 122B may be used analogously if a plurality of data sets 122C, 122D, ... are to be fetched from a plurality of repositories 124C, 124D, ....

By way of example, the application software component 106 and/or the processor 102 may further be configured to determine that at least one aspect 126-1 of the respective, extracted fetch parameter 126 is invalid if the respective, extracted fetch parameter 126 does not comply with the configurable parameter types 128; to prompt a user to provide user input relating to the respective, invalid aspect 126-I using natural language; to receive natural language reply input 120B relating to the respective, invalid aspect 126-1; and to extract the respective fetch parameter 126 including a respective, valid aspect 126-V relating to the previously invalid aspect 126-I from the received reply input 120B.

In some examples, the extraction of the respective fetch parameter 126 from the received input 120A may lead to an extracted, respective fetch parameter 126 with at least one invalid aspect 126-I. Herein, an invalid aspect 126-I may, e.g., imply that a respective aspect of the respective fetch parameter 126 is different from or incompatible with the expected, configurable parameter type 128. Referring to the above example of the user asking the DSC system 118 "How hot are the different conveyor drives in my factory and what are the conveyor statuses?", the first fetch parameter type 128A may, e.g., include an identifier (e.g., a name) and a temperature in °C for the respective conveyor drive of the factory while the corresponding first fetch parameter 126A may be used to fetch temperature data of the respective conveyor drive in °Fahrenheit instead of the expected temperature in °C. Hence, the temperature aspect of the first fetch parameter 126A may, in some examples, constitute such an invalid aspect 126-I. Further, the second fetch parameter type 128B may include an identifier (e.g., a name) and an operation status of the conveyor while the corresponding second fetch parameter 126B may be used to fetch rotational speed data of an electric pump instead of the expected conveyor name and the expected operation status of the conveyor. Consequently, both the conveyor name aspect and the operation status aspect of the second fetch parameter 126B may, in some examples, each constitute such an invalid aspect 126-I.

In further examples, the respective invalid aspect 126-I of the respective fetch parameter 126 may relate to an incompatible or different data type (or data format), e.g., integer, double-precision floating-point format for numbers, Boolean or string data types. In some examples, the respective invalid aspect 126-I of the respective fetch parameter 126 may be determined by comparing the respective fetch parameter 126 with the corresponding configurable parameter types 128.

If an invalid aspect 126-I has been determined, the user may be prompted to provide corresponding input using natural language. In some examples, this may be done using one or more LLMs, such as the above-mentioned GPT (generative pre-trained transformer) series. In further examples, a sort of discussion may be performed including several prompts to a user and several replies from the user, e.g., until sufficient information on the invalid aspect 126-I has been gathered. Hence, in some examples, the user may be guided to the invalid aspect 126-I so that the user may easier understand and recognize potential issues, non-compliances or contradictions between the respective, extracted fetch parameter 126 and the configurable parameter types 128.

The user may provide natural language reply input 120B to explain the user's intent and provide clarifications relating to the invalid aspect 126-I. Then, the respective fetch parameter 126 including a respective, valid aspect 126-V relating to the previously invalid aspect 126-I from the received reply input 120B may be determined. In some examples, this may be done by amending the respective fetch parameter 126 which may be extracted from the reply input(s) 120B provided by the user. In further examples, this may be done by amending the respective configurable parameter type 128 which may be extracted from the reply input(s) 120B provided by the user.

By way of example, the application software component 106 and/or the processor 102 may further be configured to determine that at least one aspect 126-ID of the respective, fetched data set 122A, 122B is invalid if the respective, fetched data set 122A, 122B does not comply with the respective fetch parameters 126A, 126B or with the configurable parameter types 128. Then an analogous approach involving prompting a user and receiving user input in natural language may be applied, wherein, e.g., the respective fetch parameter 126A, 126B or the configurable parameter types 128 may be amended, wherein alternatively or additionally different separate repositories 124A, 124B may be selected.

In some examples, the configurable parameter types 128 characterize the name, the data type, and optionally a description of the respective fetch parameter 126.

Referring to the above example of the user asking the DSC system 118 "How hot are the different conveyor drives in my factory and what are the conveyor statuses?", the first fetch parameter type 128A may characterize a name, e.g., of the respective conveyor drive of the factory, by including a string data type. Further, the first fetch parameter type 128A may characterize a temperature of the respective conveyor drive, e.g., expressed in °C, by including the data type "floating-point number". In another example, the second fetch parameter type 128B may again characterize the name, e.g., of the respective conveyor drive of the factory, by including a string data type. Further, the second fetch parameter type 128B may characterize an operation status of the respective conveyor drive by including a "Boolean" data type, e.g., for expressing a regular operation status of the respective conveyor drive with a "true" statement.

The configurable parameter types 128 may, e.g., further characterize a description of the respective fetch parameter, e.g., by including a string data type, e.g., which may, e.g., be used for a description of the respective fetch parameter 126 or the data set 122 to be fetched or the respective device 138, such as an automation device of an automation system 140, to which the respective fetch parameter 126 or the respective data set 122 may directly or indirectly relate, e.g., via a detectable observable 136 of the respective device 138 which may be detected as a data set 122. Hence, in some examples, the string data type for the description may be used to provide an (electronic version of an) owner's manual (also called an instruction manual or a user guide) which may include product technical specifications, safety instructions, maintenance instructions, troubleshooting instructions, setup instructions, and much more, e.g., with respect to the respective device 138 and optionally with respect to the automation system 140 in which the respective device 138 is included. Hence, in some examples, the mentioned description included in the respective configurable parameter types 128 may correspond to the below-mentioned documentation 142.

It should be appreciated that, in some examples, the configurable parameter types 128 and hence the respective fetch parameter 126 and the data set 122 may provide important information for operating, analyzing, controlling and/or monitoring the respective device 138, a plurality of devices 138 or the automation system 140 including such devices 138.

By way of example, the application software component 106 and/or the processor 102 may further be configured to receive a list of the available, separate repositories 124.

By way of example, the list may be received by the internal data store 108 or the data storage 130, e.g., from the user or from another data source, e.g., via an API. The list may include the name of the respective repository 124 and how data may be transferred from and optionally to the respective repository 124, e.g., by providing a reference to the respective repository 124 that specifies the location on a computer network or the internet and a mechanism for retrieving the respective repository 124 or data from the respective repository 124, e.g., in form of a uniform resource locator (URL), colloquially known as an address on the web. Herein, the mentioned reference, location or URL may also be understood as a connection 132 to the respective repository 124 as is explained below.

In some examples, the user may know the repositories 124 in which the user is interested in, e.g., since data sets 122 relating to devices 138 of interest to the user may be stored in these repositories 124. Hence, the user may input the list of repositories 124, e.g., as an electronic document or as natural language input, wherein in some examples, the above-mentioned chatbot may be used to guide and support the user. In further examples, a passive or active network scan may be performed to identify devices 138 and/or repositories 124 of interest and to receive the information required for the list of available, separate repositories 124, wherein the devices 138 and/or the repositories 124 may be communicatively connected with the DSC system 118, e.g., via a network or the mentioned entities constitute at least a part of the mentioned network.

Ins further examples, default parameter types 128 may be defined beforehand and only if no default parameter type 128 is available, the respective parameter type 128 may be determined. The user may, e.g. provide a separate data retrieval module for each repository 124 and optionally for each data set 122 stored in the respective repository 124. The retrieval module may, e.g., correspond to or be included in the mentioned list and may, e.g., return a so-called pandas data frame object. Herein, pandas is a software library written for the Python programming language for data processing, manipulation and analysis. In particular, it offers data structures and operations for processing or manipulating numerical tables and time series. The name is derived from the term "panel data", an econometrics term for data sets that include observations over multiple time periods for the same individuals, as well as a play on the phrase "Python data analysis". In some examples, pandas data may be two-dimensional, size-mutable, and potentially heterogeneous tabular data. The data retrieval module may, e.g., be written in any programming language, wherein there may, e.g., be a Python wrapper over it. In some examples, the parser may read the Python wrapper and may prepare the specification of input parameters which may, e.g., correspond to the respective configurable parameter type 128 and/or the list.

In further examples, the application software component 106 and/or the processor 102 may further be configured to determine the respective configurable parameter type 128 for each repository 124 and optionally for each data set 122 stored in the respective repository 124.

By way of example, the first configurable parameter type 128A relating to the first fetch parameter 126A and to the first data set(s) 122A to be fetched from the first repository 124A may be determined based on the information provided in the received list. In some examples, the first configurable parameter type 128A may be determined based on information stored in and to be queried from the first repository 124A, wherein the mentioned information may, e.g., indicate what kind of information is stored in the first repository 124A and how the information stored in the first repository 124A is organized, e.g., in terms of names, data types, descriptions, etc. Herein, the first configurable parameter type 128A may be repository-specific so that the same first configurable parameter type 128A may be applicable to all data which is stored in the first repository 124A and which may be fetched according to the suggested approach. Similar approaches may be applied to the other of the plurality of repositories 124 and the corresponding other configurable parameter types 128. A respective, repository-specific configurable parameter type 128 may, in some examples, be advantageous if the data sets 122 stored in the respective repository 124 are (all) organized similarly, e.g., in terms of names, data types, descriptions, etc. This may, by way of example, occur if similar data sets 122 of similar devices 138, such as electric motors, ponds, conveyors etc., are stored in the respective repository 124.

In further examples, the first configurable parameter type 128A may be data set-specific so that the same first configurable parameter type 128A may be applicable to similar data sets 122 or only one individual data set 122 which are/is stored in the first repository 124A and which may be fetched according to the suggested approach. This may, by way of example, occur if data sets 122 of different types and/or different devices 138, such as electric motors, pumps, conveyors etc., are stored in the respective repository 124. In some examples, the first configurable parameter type 128A may be determined based on the first data sets 122A stored in and to be queried from the first repository 124A, wherein the mentioned information may, e.g., indicate what kind of first data sets 122A are stored in the first repository 124A and how the first data sets 122A are organized, e.g., in terms of names, data types, descriptions, etc. Similar approaches may be applied to the other data sets 122 and the corresponding other configurable parameter types 128. In some examples, one data set 122 may relate to the measured temperature of a pump, another data set 122 may relate to a measured power consumption of the same pump, and yet another data set 122 may relate to operational status of the switchgear which is electrically connected to the pump, wherein both the switchgear and the pump are devices 138 of an automation system 140.

In some examples, the user may know the data sets 122 in which the user is interested, e.g., since the user is interested in certain devices 138 and hence in data sets 122 relating to these devices 138, wherein these data sets 122 may be stored in the repositories 124 from the list. Hence, the user may input the list of repositories 124 and optionally devices 138 of interest and/or data sets 122 of interest, e.g., as an electronic document or as natural language input, wherein in some examples, the above-mentioned chatbot may be used to guide and support the user. In some examples, a passive or active scan may be performed to identify devices 138, repositories 124 and/or data sets 122 of interest and to the receive the information required for the list of available, separate repositories 124, wherein the devices 138, the repositories 124 and/or the data sets 122 may be communicatively connected with the DSC system 118, e.g., via a network or the mentioned entities constitute at least a part of the mentioned network.

By way of example, the application software component 106 and/or the processor 102 may further be configured to prompt a user to provide user input relating to a connection 132 to the respective repository 124 and/or to data sets 122 to be fetched using natural language; to receive natural language reply input 120C relating to the connection 132 to the respective repository 124 and/or to data sets 122 to be fetched using natural language; and extract the respective connection 132 from the received reply input 120C.

The input relating to the connection 132 may, e.g., include how data may be transferred from and optionally to the respective repository 124, e.g., by providing a reference to the respective repository 124 that specifies the location on a computer network or the internet and a mechanism for retrieving the respective repository 124 or data from the respective repository 124, e.g., in form of a URL. In some examples, the input relating to the connection 132 may specify both a reference to the respective repository 124 and the individual, respective data set 122.

Herein, the user may be prompted to provide the mentioned input relating to the connection 132 using natural language, and the user may provide the user's corresponding reply input 120C using natural language. In some examples, it may be sufficient if the user provides a literal description of the repository's 124 or the data set's 122 location and/or a corresponding reference for communication purposes. In further examples, providing a name or location of a device 138 may be sufficient to derive the corresponding connection 132. By way of example, the user may indicate that data sets 122 of a certain repository 124 or a certain device 138 are to be fetched. The chatbot may then determine the information relating to the connection 132 based on user interaction, e.g., by asking the user questions relating to the connection 132, e.g. predefined questions, wherein based on the user's reply input 120C, the LLM may then develop and create the required code to establish the connection 132 for data transmission from and/or to the respective repository 124 and optionally from or to the respective data set 122. In some examples, the mentioned predefined questions may include querying information from the user on: 1) whether a connection 132 to a SQL database or repository 124 shall be established, 2) which data sets 122, e.g., in form of tables, from this connection 132 or this repository 124 are of interest, 3) whether a special query for this connection 132 shall be generated, and 4) what the parameters for this connection 132 are, such as an identifier or location of the repository 124 or the data set 122 are, or other metadata of the repository 124 or the data set 122, etc.

In some examples, the above-mentioned chatbot may be capable of (triggering) extracting the required URL or other technical communication details of the connection 132 from the received reply input 120C. In further examples, the different repositories 124 or data sets 122 may have different data types or data formats. The respective connection 132 may, e.g., be capable of transforming the respective data type or data format of the different repositories 124 or data sets 122 into a predefined standard data type or format, e.g., using Python or the above-mentioned panda data frame.

In further examples, the information relating to the respective connection 132 may be included in the above-mentioned list and/or in the respective patch parameter 126 for the respective, configurable parameter type 128.

In some examples, the application software component 106 and/or the processor 102 may further be configured to receive natural language input 120D indicative of activating or deactivating the respective stored, fetched data set 122; to receive natural language input 120E indicative of processing one or more of the respective stored, fetched data sets 122; and to process the one or more of the respective stored, fetched data set 122 only if the respective stored, fetched data set 122 is activated or not deactivated.

Using the suggested approach, large amounts of data may be stored in the data storage 130, especially over time and if fetched and stored data sets 122 are not discarded, e.g. after a certain period of time, e.g., if not used for data analysis, etc. Hence, in some examples, analyzing or processing the fetched and stored data sets 122 may consume increasing, and in some examples excessive, computation resources and, e.g., memory resources. Therefore, in some examples, the respective stored, fetched data set 122 may be deactivated, e.g., to make the respective, deactivated data set 122 unavailable for analysis or processing. Correspondingly, the respective stored, fetched data set 122 may be activated, e.g., to make the respective, activated data set 122 available for analysis or processing. By way of example, the activation or the deactivation of the respective data set 122 may be achieved by flagging the respective data set 122 accordingly. In further examples, the respective data set 122 may be stored in a dedicated part of the data storage 130 indicating the deactivation or the activation of the respective data set 122, wherein optionally the activated data sets 122 may be stored in a hot storage part of the data storage 130, and the deactivated data sets 122 may be stored in a cold storage part of the data storage 130. Herein, hot storage may, e.g., imply using fast data access and fast transport protocols for the hot storage part of the data storage 130 and/or positioning the hot storage part of the data storage 130 near to the processor 102 of the DSC system 118. Cold storage may, e.g., imply using comparably slow data access and slow transport protocols for the cold storage part of the data storage 130 and/or positioning the cold storage part of the data storage 130 comparably remote from the processor 102 of the DSC system 118. Further, hot storage may, e.g., be more costly compared to rather affordable cold storage. In some examples, hot storage may, e.g., be achieved using a layered or hybrid storage system.

In some examples, processing the respective data set 122 be understood as the collection and manipulation of digital data to produce meaningful information. Herein, data processing may be a form of information processing, which is the modification (processing) of information in any manner detectable by an observer. The functions of processing the respective data set 122 may include with respect to one or more of the data sets 122:

- Validation: ensuring that supplied data is correct and relevant,
- Sorting: arranging items in some sequence and/or in different sets,
- Summarization(statistical) or (automatic): reducing detailed data to its main points,
- Aggregation: combining multiple pieces of data,
- Analysis: the collection, organization, analysis, interpretation and presentation of data, including plotting or illustrating,
- Reporting: list detail or summary data or computed information, and
- Classification: separation of data into various categories.

In further examples, one or more of the above processing aspects may also be understood as augmenting, combining, or transforming one or more of the data sets 122.

It should be appreciated, that in some examples, activating and deactivating selected stored, fetched data sets 122 may have a great influence on the processing speed and the processing quality with respect to the stored, fetched data sets 122. For example, overly large amounts of data sets 122 that have been fetched and stored in the data storage 130 may result in overly long processing times and, in some examples, even in wrong processing results. Therefore, selectively activating or deactivating data sets 122 may contribute to a meaningful collection and processing of data sets 122 which, in some examples, may be used to analyze, monitor, control and/or operate the respective device 138 and/or the automation system 140.

In further examples, for processing one or more of the respective stored, fetched data sets the application software component 106 and/or the processor 102 may further be configured to plot the respective stored, fetched data set 122, optionally as a function of the same respective stored, fetched data set 122 and/or as a function of one or more other respective stored, fetched data sets 122; and to create one or more illustrations 134 or one or more video sequences of illustrations 134 from the plotted function(s).

Herein, a plot may be understood as a graphical technique for representing a data set 122, usually as a graph showing the relationship between two or more variables. The plot can, e.g., be drawn by hand or by a computer, wherein in the context of the present invention, a computer-generated plot is considered. Graphs may be a visual representation of the relationship between variables, e.g., one or more of the data sets 122, wherein, in some examples, the variables may include a time (stamp), one or more detectable observables 136 included in one or more of the data sets 122, etc. By way of example, the plotting library "matplotlib" for the Python programming language may be used for plotting one or more of the data sets 122. Matplotlib provides an object-oriented API for embedding plots into applications using general-purpose GUI toolkits like Tkinter, wxPython, Qt, or GTK.

In further examples, the created plot may correspond to the respective illustration 134, wherein, in some examples, several plots may be combined into one respective illustration 134. Also, by way of example, several plots or illustrations 134 may be combined to create one or more video sequences of illustrations 134, e.g., showing a temporal evolution of one or more detectable observables 136 or quantities derived thereof by data processing.

In some examples, the above-mentioned chatbot receives input from the user to plot the respective stored, fetched data set one 122, wherein the chatbot may, in some examples, make suggestions on the different plot and illustration functions, and wherein the user may select a desired function, e.g., using natural language, respectively.

By way of example, the respective, fetched data set 122 may relate to a detectable observable 136 of a respective device 138, such as an automation device of an automation system 140, wherein the application software component 106 and/or the processor 102 may further be configured to receive documentation 142 relating to the respective, fetched data set 122 and/or the respective device 138, wherein the documentation 142 characterizes at least one of device properties, device components, a device configuration, a device performance parameter, a device operating parameter, a device status parameter, a device condition parameter, or any combination thereof; to identify at least one aspect 142-122 of the received respective documentation 142 relating to the respective, fetched data set 122; and to communicate the respective, fetched data set 122 and the related respective aspect 142-122 of the received respective documentation 142 to the user, e.g., via a display device 112.

By way of example, the detectable observable 136 may be a physical, chemical or other property or quantity that can be measured directly or indirectly, e.g., a position, a speed or velocity, an electric current or voltage, an electric power, an acidity, a volume flow, etc. In further examples, the detectable observable may be understood more broadly to include a status or condition of the respective device 138 and/or of the automation system 140, or quantities derived from detected observables 136 e.g. by means of data processing performed before or while storing the respective data set 122 in the respective repository 124, before fetching the respective data set 122 from the respective repository 124, and before storing the respective data set 122 in the data storage 130.

In some examples, the respective device 138 may be or include a sensor, an actuator, such as an electric motor, a valve or a robot, and inverter supplying an electric motor, a gear box, a programmable logic controller (PLC), a communication gateway, and/or other parts component relating to industrial automation products and industrial automation in general. The respective device 138 may be part of an automation system 140, such as a complex production line or production plant, e.g., a bottle filing machine, conveyor, welding machine, welding robot, etc. Further, by way of example, the automation system 140 may include or be part of an IT system, e.g., a manufacturing operation management (MOM) system, a manufacturing execution system (MES), an enterprise resource planning (ERP) system, a supervisory control and data acquisition (SCADA) system, or any combination thereof.

The detectable observable 136 and/or the documentation 142 may, e.g., be included in the respective, fetched data set 122. In other examples, i.e., if the detectable observable 136 and/or the documentation 142 are not included in the respective, fetched data set 122, the detectable observable 136 and/or the documentation 142 may be received or fetched, e.g., from the respective repository 124 in which the respective data set 122 is stored or from other data stores. By way of example, the documentation may be retrieved upon a corresponding query, e.g., in natural language, by the user. In some examples, the documentation 142 may include valuable metadata on the respective device 138 which, in some examples, generates or detects the detectable observable 136. Hence, the documentation 142 may contribute to provide more insights into the capabilities of the respective device 138 and into the respective, fetched data set 122. These insights may, e.g., allow for an improved analysis and interpretation of the respective, fetched data set 122 or for an improved analysis, monitoring, operation, and/or control of the respective device 138 or the automation system 140. Herein, the various aspects of the documentation 142 may indicate for the respective device 138 and/or the automation system 140: the functionalities and limitations, the individual components if the respective device 138 or automation system 140 is composed of several components, the configuration parameters with which the respective device 138 or automation system 140 is operated, the rated power, throughput, etc. of the respective device 138 and/or the automation system 140, respectively, etc.

It should be appreciated that the above-described aspects of the detectable observable 136, the respective device 138, the automation system 140 and/or the documentation 142 may, in some examples, equally be applicable to other aspects of the suggested approach described above or below.

In some examples, the documentation 142 may be comprehensive and cover a plurality of different aspects of the respective data set 122 or the respective device 138. By way of example, core aspects 142-122 of the respective documentation 142 may be selected or identified and then - together with the respective, fetched data set 122 - be communicated to the user, e.g., by displaying the respective aspect 142-122 via the display device 112 or acoustically, e.g., via a speaker. The aspects 142-122 to be communicated to the user may, e.g., be provided by the user via natural language input which has been analyzed to extract the respective aspect 142-122, wherein in some examples, the mentioned aspects 142-122 may be defined beforehand and may, e.g. focus on key performance parameters of the respective device 138 or the automation system 140.

By way of example, a comparison may be done between the detectable observable 136 that may be included in the respective, fetched data set 122 and corresponding information in the documentation 142, e.g., to check whether recent values of the detectable observable 136 remain in parameter ranges which regularly occur during normal operation of the respective device 138 or the automation system 140. Herein, the respective detectable observable 136 may, e.g., include or relate to a key performance indicator of the respective device 138 or the automation system 140, wherein recent measurements or determinations of the respective detectable observable 136 may be compared with the corresponding documentation 142, e.g., as described above. By way of example, both recently measured values of the detectable observable 136 and the mentioned parameter ranges may be communicated to the user. This allows the user, e.g., to get data which is relevant to the operation of the respective device 138 or the automation system 140 fast and reliably, wherein optionally the above-mentioned data processing functionalities may be applied on the respective, fetched data set 122 or the values of the detectable observable 136.

By way of example, the user or some other data store may provide the documentation 142 to the DSC system 118, e.g., by interacting with the chatbot. The user may then, e.g., query the chatbot what the current configuration of a certain robot is or what a particular part of the robot is responsible for, wherein the robot corresponds to the respective device 138 of an automation system 140, e.g., to produce car bodies. Herein, the robot may provide current operational data as data sets 122 via a corresponding repository 124 which may be fetched and stored in the data storage 130 according to the suggested approach. The chatbot may then analyze the provided documentation 142 to answer the user's query and provide the answer to the user. In some examples, the user may query the chatbot what the current temperature of the robot or a part of the robot is and optionally what the ideal operating temperature of the robot or a part of the robot is. Here, the current temperature may be the detectable observable 136 included in the mentioned data set 122 so that the chatbot may fetch the corresponding data set 122 and provide corresponding information to the user. Further, a comparison of the fetched current temperature of the robot or the part of the robot with the ideal operating temperature included in the documentation 142 may be done and the results may also be communicated to the user, optionally with a warning or an alarm if the robot has a too high temperature.

By way of example, the application software component 106 and/or the processor 102 may further be configured to identify at least one discrepancy 144 between the respective, fetched data set 122 and the related respective aspect 142-122 of the received respective documentation 142; and to communicate information 144-1 on the respective discrepancy 144 to the user, e.g., via a display device 112, and/or to cause to change the operation status of the respective device 138 or an automation system 140 including the respective device 138.

In some examples, the respective discrepancy 144 may relate to the above-mentioned comparison between the respective detectable observable 136, e.g., relating to a key performance indicator of the respective device 138 or the automation system 140, and the corresponding documentation 140. Hence, if the respective device 138 or the automation system 140 is operated outside the regular operating conditions, a discrepancy 144 may be identified and corresponding information 144-1 may be communicated to the user.

In further examples, the discrepancy 144 may also be identified if the respective device 138 or the automation system 140 is changed, e.g., by replacing components, while the documentation 142 is not updated accordingly. Such a discrepancy 144 may indicate as the related aspect 142-122 an unauthorized change made to the respective device 138 or the automation system 140. In some examples, the discrepancy 144 may indicate as the related aspect 142-122 a malfunction or a critical wear of the respective device 138 or the automation system 140 which may require a repair, a replacement, a service, or a maintenance of the respective device 138, the automation system 140 or one of their components. A plurality of other industrial scenarios may be possible, wherein the corresponding related aspect 142-122 may be identified by comparing the respective data set 122 with the corresponding documentation 142.

In some examples, if a discrepancy 144 is identified, the operation of the respective device 138 or the automation device 140 may be caused to be changed such that the mentioned operation returns to regular operating conditions or, if this is not possible, the respective device 138 of the automation system 140 is shut down or operated according to a safety mode. By way of example, the information 144-1 on the respective discrepancy 144 may include a warning or an alert. By way of example, the DSC system 118 may send a corresponding message or command to the respective device 138 of the automation system 140 that causes a changed operation of the respective device 138 of the automation system 140.

By way of example, the application software component 106 and/or the processor 102 may further be configured to store a sequence of steps in the data storage 130; to offer the respective sequence of steps to the user for selection; and to execute the respective sequence of steps if selected by the user, wherein the sequence of steps includes at least three of the following steps:

   ◦ fetching the data sets 122 corresponding to the respective, extracted fetch parameter 126 from repositories 124;
   ◦ determining the respective configurable parameter type 128 for each repository 124 and optionally for each data set 122 stored in the respective repository 124;
   ◦ processing one or more of the respective stored, fetched data sets 122 only if the respective stored, fetched data set 122 is activated or not deactivated;
   ◦ communicating the respective stored, fetched data set 122 and/or the processed, stored, fetched data set 122 to the user, e.g., via a display device 112;
   ◦ plotting the respective stored, fetched data set 122 as a function of the same respective stored, fetched data set 122 and/or as a function of one or more other respective stored, fetched data sets 122;
   ◦ creating one or more illustrations 134 or one or more video sequences of illustrations 134 from the plotted functions.
   ◦ displaying the created respective illustration 134 or video sequence of illustrations 134 via a display device 112;
   ◦ communicating the respective, fetched data set 122 and the related respective aspect 142-122 of the received respective documentation 142 to the user, e.g., via a display device 112;

○ communicating information 144-1 on the respective discrepancy 144 to the user, e.g., via a display device 112, and/or

○ changing the operation status of the respective device 138 or an automation system 140 including the respective device 138;

- offering the respective sequence of steps to the user for selection; and
- executing the respective sequence of steps if selected by the user.

In some examples, the mentioned sequence may correspond to building blocks of steps of processing data sets 122. Such sequences may, e.g., be established by more advanced users or admin users and may contribute to facilitate and speed up standard data processing sequences. In some examples, the user may only need to provide an input to the chatbot to carry out one of the available sequences which, in some examples, may be offered to the user acoustically or via a display for selection. Hence, the sequences may also contribute to avoid erroneous data processing, e.g., caused by inexperienced users providing incorrect or inadequate input data or queries, and may therefore contribute to achieve high-quality output data even for inexperienced users.

In further examples, if the user has carried out several of the above-mentioned data processing steps, e.g., relating to the to the same data sets 122, the same device 138, the same automation system 140 and/or the same documentation 142, the chatbot may query the user whether a corresponding sequence shall be stored as a sequence in the data storage. If the user confirms, e.g., after making amendments to the sequence, the (amended) sequence may be stored in the data storage 130.

The application software component 106 and/or the processor 102 may then further be configured to offer the respective sequence of steps to the user for selection; and to execute the respective sequence of steps if selected by the user.

It should be appreciated that the described the application software component 106 and/or the processor 102 may carry out an analogous method of fetching and using siloed data in an automation environment. Further, a computer-readable medium 160 which may include a computer program product 162 is shown in Fig. 1, wherein the computer program product 162 may be encoded with executable instructions, that when executed, cause the computer system 100 or and/or the DSC system 118 to carry out the described method.

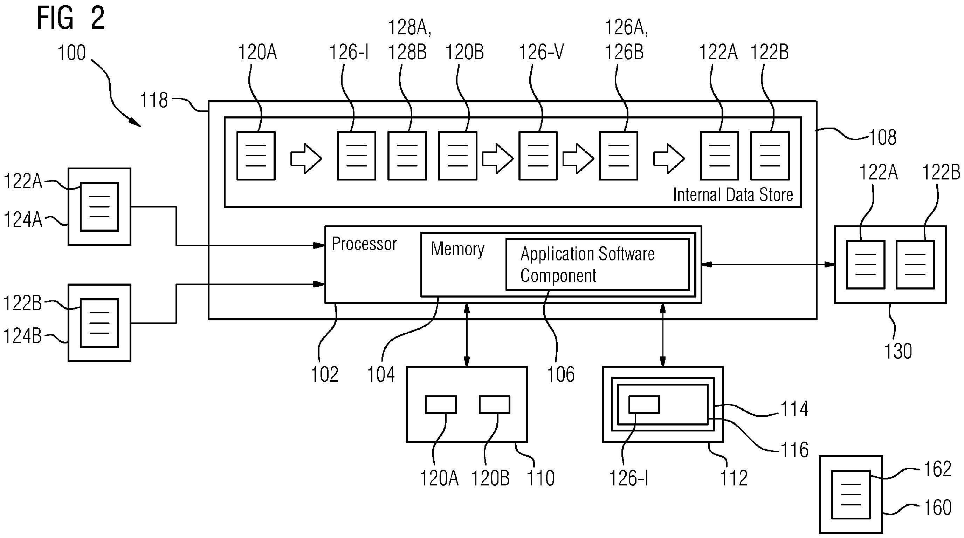

With reference to Fig. 2, a functional block diagram of a second example computer system or data processing system 100 is depicted that facilitates fetching and using siloed data in an automation environment.

According to the second example, the DSC system 118 may identify at least one aspect 126-I of the respective, extracted fetch parameter 126 as invalid if the respective, extracted fetch parameter 126 does not comply with the configurable parameter types 128. The user may then be prompted by the DSC system 118 to provide user input relating to the respective, invalid aspect 126-I using natural language, wherein the prompt may, e.g., be displayed on the display device 112. The user may then provide natural language reply input 120B relating to the respective, invalid aspect 126-I which is received by the DSC system 118. The DSC system may then extract the respective fetch parameter 126 including a respective, valid aspect 126-V relating to the previously invalid aspect 126-I from the received reply input 120B.

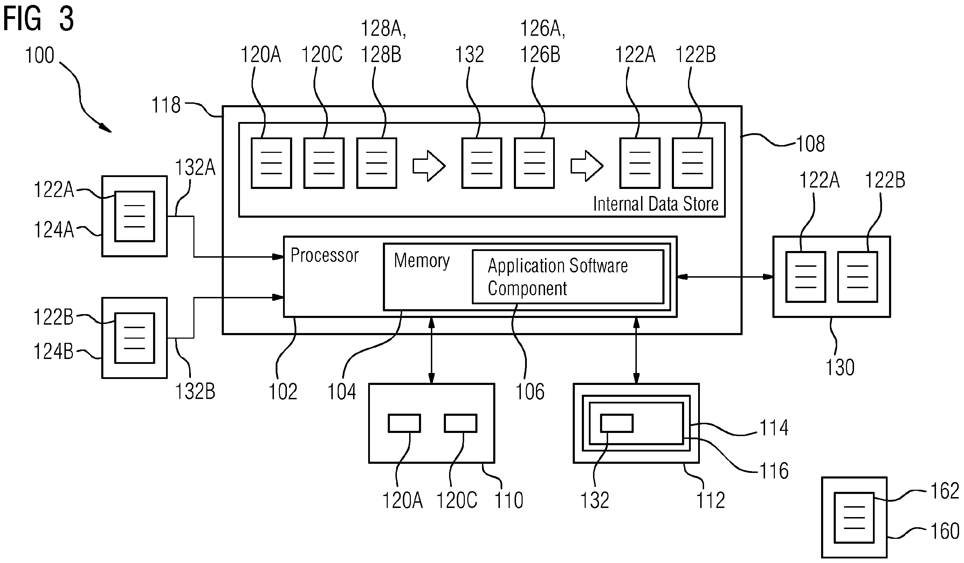

With reference to Fig. 3, a functional block diagram of a third example computer system or data processing system 100 is depicted that facilitates fetching and using siloed data in an automation environment.

According to the third example, the DSC system 118 may prompt a user to provide user input relating to a connection 132 to the respective repository 124 and/or to data sets 122 to be fetched using natural language. The user may provide natural language reply input 120C relating to the connection 132 to the respective repository 124 and/or to data sets 122 to be fetched using natural language, wherein the DSC system 118 receives the reply input 120C and extracts the respective connection 132 and/or the data sets 122 from the received reply input 120C.

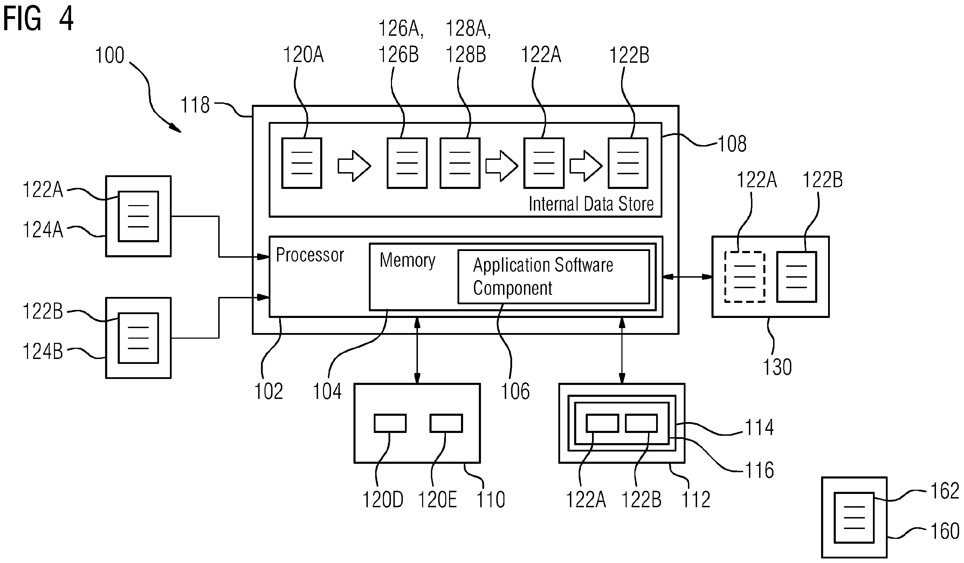

With reference to Fig. 4, a functional block diagram of a fourth example computer system or data processing system 100 is depicted that facilitates fetching and using siloed data in an automation environment.

According to the fourth example, the DSC system 118 may receive natural language input 120D from the user indicative of activating or deactivating the respective stored, fetched data set 122. In the data storage 130 in Fig. 4, the dashed line of the first data set 122A indicates that the first data set 122A is deactivated, wherein the second data set 122B is active as indicated by the solid line in Fig. 4. The DSC system 118 may further receive natural language input 120E indicative of processing one or more of the respective stored, fetched data sets 122, wherein the DSC system 118 may only process the one or more of the respective stored, fetched data set 122 if the respective stored, fetched data set 122 is activated or not deactivated, i.e., in the fourth example only the active second data set 122B may be processed while the deactivated first data set 122A may not be processed.

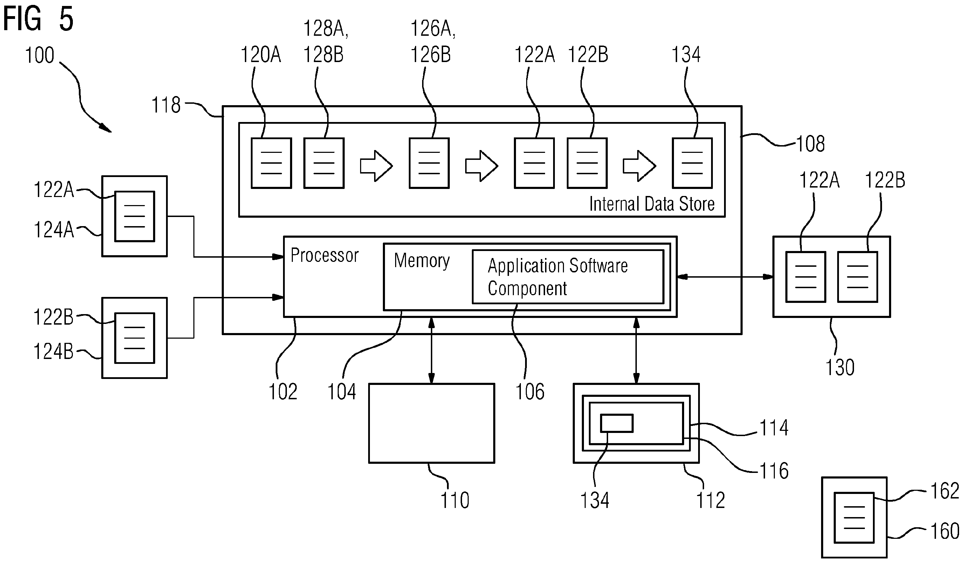

With reference to Fig. 5, a functional block diagram of a fifth example computer system or data processing system 100 is depicted that facilitates fetching and using siloed data in an automation environment.

According to the fifth example, the DSC system 118 may to plot the respective stored, fetched data set 122, optionally as a function of the same respective stored, fetched data set 122 and/or as a function of one or more other respective stored, fetched data sets 122 and create one or more illustrations 134 or one or more video sequences of illustrations 134 from the plotted function(s). The DSC system 118 may then display the respective illustration 134 to the user via the display device 112.

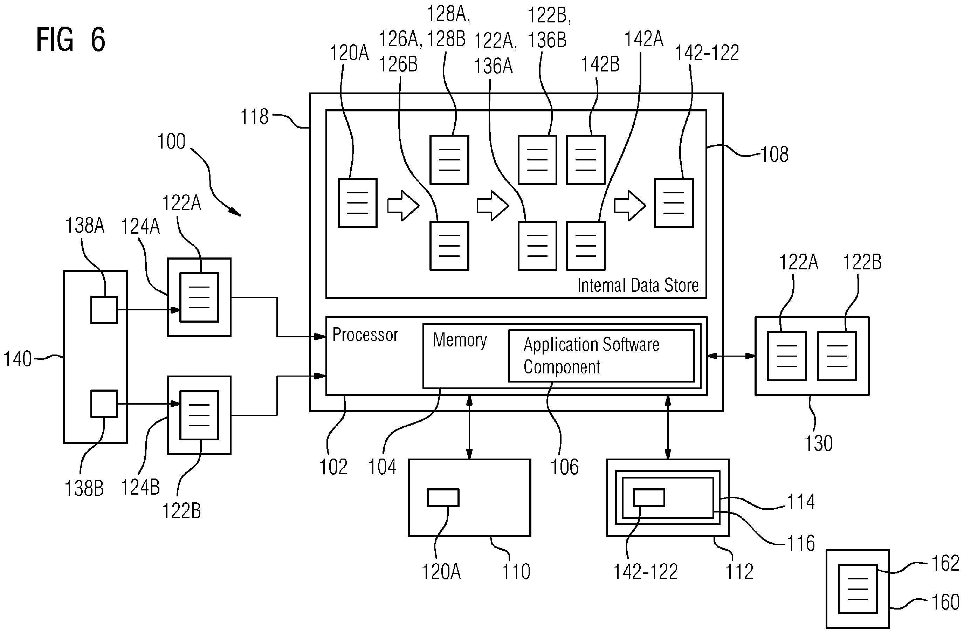

With reference to Fig. 6, a functional block diagram of a sixth example computer system or data processing system 100 is depicted that facilitates fetching and using siloed data in an automation environment.

According to the sixth example, the first data set 122A is related to a first device 138A and the second data set 122B is related to a second device 138B, wherein the first device 138A and the second device 138B are both included in an automation system 140. The DSC system 118 may receive documentation 142 relating to the respective, fetched data set 122 and/or the respective device 138, wherein the documentation 142 may characterize at least one of device properties, device components, a device configuration, a device performance parameter, a device operating parameter, a device status parameter, a device condition parameter, or any combination thereof of the respective device 138 or the automation system 140. The DSC system 118 may identify at least one aspect 142-122 of the received respective documentation 142 relating to the respective, fetched data set 122 and communicate the respective, fetched data set 122 and the related respective aspect 142-122 of the received respective documentation 142 to the user via a display device 112.

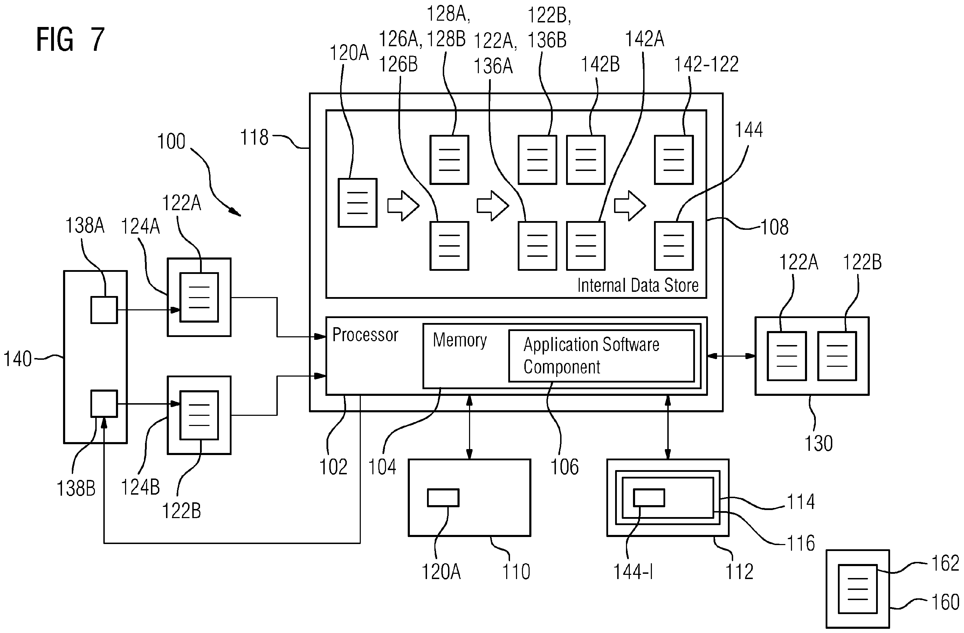

With reference to Fig. 7, a functional block diagram of a seventh example computer system or data processing system 100 is depicted that facilitates fetching and using siloed data in an automation environment.

The seventh example has several similarities to the sixth example explained above and depicted in Fig. 6. The DSC system 118 according to the seventh example may identify at least one discrepancy 144 between the respective, fetched data set 122 and the related respective aspect 142-122 of the received respective documentation 142 and communicate information 144-I on the respective discrepancy 144 to the user via a display device 112. Additionally, the DSC system 118 may cause to change the operation status of the respective device 138 or an automation system 140 including the respective device 138 as indicated with the arrow from the processor 102 of the DSC system 118 to the second device 138B of the automation system 140.

In another embodiment, the major benefits of the proposed solution may include:

- A natural language interface over all types of siloed data.
- The same interface is provided to access the live data generated from different devices that may include logs.
- Ability to augment and explain data based on the documentation provided by the user in the document index.
- Ability to create mechanisms to get answers to complex queries using plans or sequences.
- Ability to plot the generated data when needed.

In some examples, the chatbot may not have a control flow as a common application. Instead, there may only two main components of the chatbot: 1. An agent, and 2. Different tools.

The agent is the algorithm that understands the user query and uses different tools to answer the question posed by the user. When a user provides the agent with a query, the agent generates a plan and chooses the tool that comes first in the plan. If the agent cannot come up with a plan, then it can use the tool "Search Relevant Plan" to search for a plan that is provided by the user. After the plan generation or selection, the agent executes the tool and reflects on all the results collectively. Then it checks whether the final answer is achieved, if yes, then it presents the answer, if not, then it goes back to the plan and executes the next tool. Note that sometimes the word "skill" is used in place of "tool", although, both have the same purpose and functionality. It should be noted that the agent may change its plan when it reflects on the response from a tool. Secondly, there could be exceptions generated from different tools, in those cases, the agent is notified that an exception has occurred. The agent decides autonomously what to do in such a situation. Each step that the agent takes, queries the LLM after preparing an appropriate prompt. The prompt generation is templated, as is the common practice. There are no special considerations taken in prompt generations so their details are not mentioned in the document. Common tools to generate prompts through templates are already in wide usage.

The tools may play the most important part in the implementation of the chatbot. The tools may be designed by a meticulous thought process after analyzing the robustness and scalability of the design. The tools may include:

- Dataset-related tools:

    ◦ "The Fetch Dataset" tool is the most important one here. Users can issue a query similar to "Fetch from <connection name> where <parameter 1 = value 1> and <parameter 2 = value 2> and <parameter 3 = value 3>". The agent will deduce from this query that it has to invoke the Fetch dataset tool along with the parameters specified by the user.

    ◦ The "Get Loaded Dataset Names" tool is mostly for the user to see which data sets are loaded so they can query the relevant ones. The agent may also use it to get the names of datasets already loaded.

    ◦ The "Show Dataset" tool is mostly used by the user alone, this is why it contains a user sign beside it in the diagram. It takes the data set name as an input parameter and delivers the first few rows to have an understanding of the dataset.

◦ Similar to the above is "Activate Dataset" tool. This is also used by the user alone. When a user activates a dataset the chatbot gets it into focus, and the queries after that are assumed to be relevant to the activated dataset unless the user specifies the name of a data set explicitly.

◦ Similarly "Deactivate Dataset" tool is used to deactivate the previously active dataset.

◦ From the user's perspective the "Query Datasets" tool is the most important one because using this tool users can perform common database operations on the data sets. For example, the user can say, "Join <data set 1> with <data set 2> on the column name <column>". User does not need to write exact SQL queries to get their answer, instead, the tool can translate the user's query into SQL automatically. This tool is not proprietary and is available open source, so its details can be seen from online resources. One functionality is added by the authors to give a name to the result of the query and save it. So the user may say "Join <data set 1> with <data set 2> on the column name <column> and save the result in <result>". Later users can perform all operations on <result> just like they can perform operations on other data sets fetched by the agent.

◦ The "Plot Data" tool is used to view the data. Users can perform numerous actions and save the result in a table. Then they can provide the table name to the Plot data tool to view the data.

• Plan-related tools: plans are used to answer complex queries where the agent cannot come up with a plan, it uses the following tools to search for a plan and then execute it.

◦ The "Load All Plans" tool is used to load the plans at runtime. If the user has updated the plans after the application has started, then they can use this tool to load the updated plans.

◦ The "Search Relevant Plan" tool is used by the agent when it cannot generate an appropriate plan on its own. It must be noted that at any point the agent can override this plan or extend it based on the output from the tools.

• Connection-related tools:

◦ The "Load All Connection" tool is used to load the connections and the Data Retriever components at runtime. If the user has added a new connection and the relevant component after the application has started, then they can use this tool to load the updated connections.

◦ The "Get Connection Names" tool is used to load all the available connection strings along with the retriever components. The connection name is derived from the file name of the component, while information related to parameters is extracted from the code.

• Other tools:

◦ The "Documentation Search" tool is used to search through the document index provided by the user. The solution also provides the tools to create such an index.

◦ The "Get Chat History" tool is used to search through the question and answer history of the user to create a relevant context.

◦ The "Get User Input" tool is used to ask the user if there is any ambiguity. The agent formulates an appropriate question and then uses the answer to proceed in the already executing chain of thoughts.

To access different data silos, an abstraction of data retrieval components may be created. The user has to provide a separate data retrieval module for each table in the data silo. The module must return a Pandas data frame object. The module itself can be written in any programming language but there must be a Python wrapper over it. The parser reads the Python wrapper and prepares the specification of input parameters.

After extraction, all parameters are available in a Python dictionary. Each parameter must have the following attributes

• Name: name of the parameter
• Type: the data type of the parameter
• Description: This is used to create a prompt for the user when the agent asks the user to provide the value of the parameter.

When the user asks a query to fetch data from a connection, the parameters may be extracted from the query. Then the parameters are converted to the type specified in the parameter specifications. After that, the data retrieval module provided by the user is invoked to fetch the data. The data is then stored in a local database for further operations.

Now that all the components of the chatbot are explained, it is useful to have an overview of the user experience.

When a user starts the chatbot, there is no data available to the chatbot except the document index. Users can query the information from the index if they want, but if they want to query the live data or the data stored in the silos, then they will first have to invoke the relevant data retrieval components. A user can do this by giving the command in natural language. For example "Fetch data from connection <connection name>", or simply "Fetch <connection name>". Issuing this query will invoke the Fetch Dataset tool. To prepare a query like the above, the user may have to use many other tools, for example, Load All Connections to first load the connections, then Get Connection Names to have a look at all the connection names and choose one among them. After fetching the data from one or more connections, the user can execute any common data manipulation commands on them and save the result in intermediate tables. These intermediate tables are available for the user to execute queries and apply transformations. The user can ask complex queries that may result in invoking nested queries. The Query Dataset tool will be invoked at the backend and the result will be saved for the user for further processing. In a nutshell, it is a complete interface to data retrieval and transformation in natural language. It should be noted that during the process mentioned above, if the user makes any mistake, for example, does not provide a required argument to any function, then the chatbot guides the user to provide the arguments with their type possibly with an example. This part is also a key difference from the previous solutions. Moreover, if the user wants to augment the data from the document index, then that is also possible. For example, the command, "Fetch all status codes in the past hour and give me their description" will fetch the status codes from the active dataset and then search the document index to get their description.

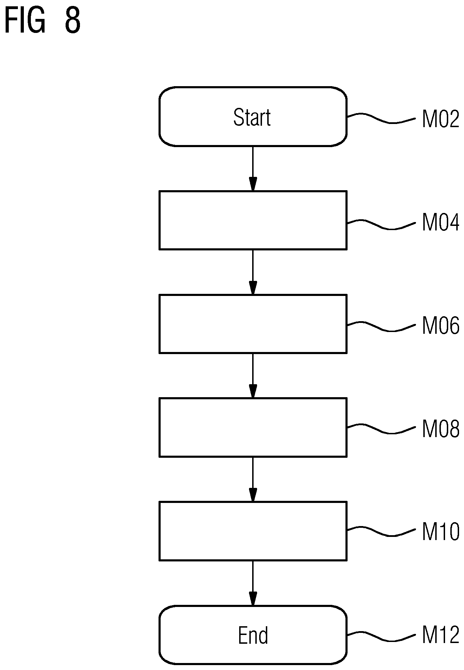

Fig. 8 depicts a flow diagram of an example methodology that facilitates fetching and using siloed data in an automation environment in a product system. The method may start at M02, and the methodology may include several acts carried out through operation of at least one processor.

These acts may include an act M04 of receiving natural language input indicative of fetching data sets in at least two separate repositories; an act M06 of extracting at least two fetch parameters according to configurable parameter types from the received input; an act M08 of fetching the data sets corresponding to the respective, extracted fetch parameter from repositories; and an act M10 of storing the respective, fetched data set in a data store. At M12 the methodology may end.

It should further be appreciated that the methodology M may include other acts and features discussed previously with respect to the computer-implemented method of fetching and using siloed data in an automation environment.

In some examples, the methodology may further include an act of prompting a user to provide user input relating to a connection to the respective repository and/or to data sets to be fetched using natural language; an act of receiving natural language reply input relating to the connection to the respective repository and/or to data sets to be fetched using natural language; and an act of extracting the respective connection from the received reply input.

In further examples, the methodology may further include an act of receiving natural language input indicative of activating or deactivating the respective stored, fetched data set; an act of receiving natural language input indicative of processing one or more of the respective stored, fetched data sets; and an act of processing the one or more of the respective stored, fetched data set only if the respective stored, fetched data set is activated or not deactivated, wherein optionally an act of plotting the respective stored, fetched data set as a function of the same respective stored, fetched data set and/or as a function of one or more other respective stored, fetched data sets; and an act of creating one or more illustrations or one or more video sequences of illustrations from the plotted function(s) may further be included.

By way of example, if the respective, fetched data set relates to a detectable observable of a respective device, such as an automation device of an automation system, the methodology may further include an act of receiving documentation relating to the respective, fetched data set and/or the respective device, wherein the documentation characterizes at least one of device properties, device components, a device configuration, a device performance parameter, a device operating parameter, a device status parameter, a device condition parameter, or any combination thereof; an act of identifying at least one aspect of the received respective documentation relating to the respective, fetched data set; and an act of displaying the respective, fetched data set and the related respective aspect of the received respective documentation via a display device. Optionally, the methodology may further include an act of identifying at least one discrepancy between the respective, fetched data set and the related respective aspect of the received respective documentation; and an act of displaying information on the respective discrepancy via a display device and/or an act of changing the operation status of the respective device or an automation system including the respective device.

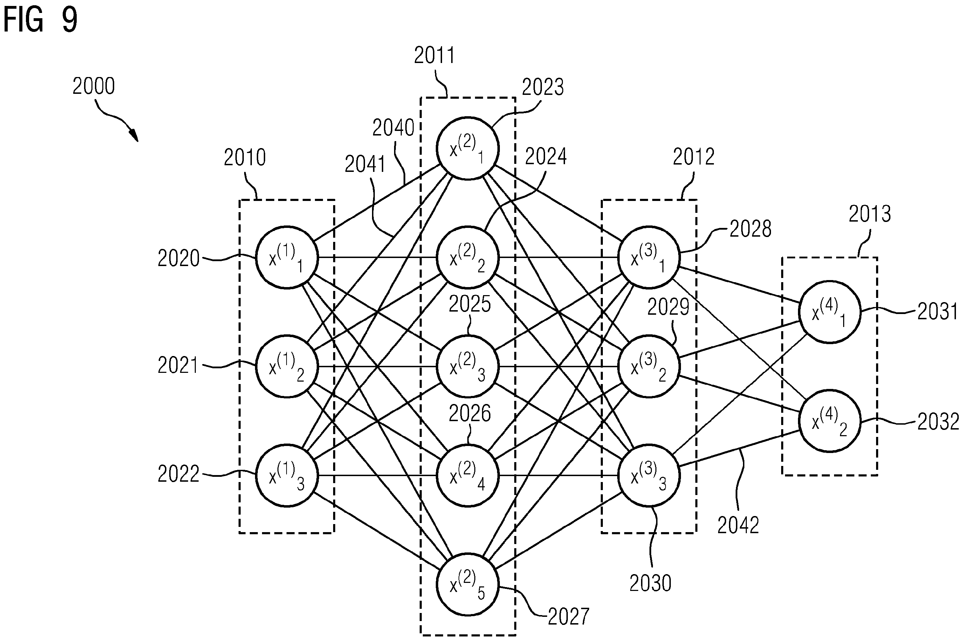

Fig. 9 displays an embodiment of an artificial neural network 2000 which may be used in the context of fetching and using siloed data in an automation environment in a product system. Alternative terms for "artificial neural network" are "neural network", "artificial neural net" or "neural net".

The artificial neural network 2000 comprises nodes 2020, ... , 2032 and edges 2040, ..., 2042, wherein each edge 2040, ..., 2042 is a directed connection from a first node 2020, ... , 2032 to a second node 2020, ..., 2032. In general, the first node 2020, ... , 2032 and the second node 2020, ... , 2032 are different nodes 2020, ..., 2032, it is also possible that the first node 2020, ..., 2032 and the second node 2020, ... , 2032 are identical. For example, in Fig. 6 the edge 2040 is a directed connection from the node 2020 to the node 2023, and the edge 2042 is a directed connection from the node 2030 to the node 2032. An edge 2040, ..., 2042 from a first node 2020, ... , 2032 to a second node 2020, ... , 2032 is also denoted as "ingoing edge" for the second node 2020, ... , 2032 and as "outgoing edge" for the first node 2020, ..., 2032.

In this embodiment, the nodes 2020, ..., 2032 of the artificial neural network 2000 can be arranged in layers 2010, ..., 2013, wherein the layers can comprise an intrinsic order introduced by the edges 2040, ... , 2042 between the nodes 2020, ..., 2032. In some examples, edges 2040, ... , 2042 can exist only between neighboring layers of nodes. In the displayed embodiment, there is an input layer 2010 comprising only nodes 2020, ..., 2022 without an incoming edge, an output layer 2013 comprising only nodes 2031, 2032 without outgoing edges, and hidden layers 2011, 2012 in-between the input layer 2010 and the output layer 2013. In general, the number of hidden layers 2011, 2012 can be chosen arbitrarily. The number of nodes 2020, ... , 2022 within the input layer 2010 usually relates to the number of input values of the neural network, and the number of nodes 2031, 2032 within the output layer 2013 usually relates to the number of output values of the neural network.

In some examples, a (real) number can be assigned as a value to every node 2020, ... , 2032 of the neural network 2000. Here, $x^{(n)}_i$ denotes the value of the i-th node 2020, ... , 2032 of the n-th layer 2010, ..., 2013. The values of the nodes 2020, ... , 2022 of the input layer 2010 are equivalent to the input values of the neural network 2000, the values of the nodes 2031, 2032 of the output layer 2013 are equivalent to the output value of the neural network 2000. Furthermore, each edge 2040, ... , 2042 can comprise a weight being a real number, e.g., the weight is a real number within the interval [-1, 20] or within the interval [0, 20]. Here, $w^{(m,n)}_{i,j}$ denotes the weight of the edge between the i-th node 2020, ... , 2032 of the m-th layer 2010, ..., 2013 and the j-th node 2020, ... , 2032 of the n-th layer 2010, ..., 2013. Furthermore, the abbreviation $w^{(n)}_{i,j}$ is defined for the weight $w^{(n,n+1)}_{i,j}$.

In some examples, to calculate the output values of the neural network 2000, the input values are propagated through the neural network. By way of example, the values of the nodes 2020, ..., 2032 of the (n+1)-th layer 2010, ..., 2013 can be calculated based on the values of the nodes 2020, ... , 2032 of the n-th layer 2010, ..., 2013 by

$$x^{(n+1)}_j \; = \; f\left(\sum_i x^{(n)}_i \cdot w^{(n)}_{i,j}\right)$$

Herein, the function f is a transfer function (another term is "activation function"). Known transfer functions are step functions, sigmoid function (e.g., the logistic function, the generalized logistic function, the hyperbolic tangent, the Arctangent function, the error function, the smoothstep function) or rectifier functions. The transfer function is mainly used for normalization purposes.

In some examples, the values are propagated layer-wise through the neural network, wherein values of the input layer 2010 are given by the input of the neural network 2000, wherein values of the first hidden layer 2011 can be calculated based on the values of the input layer 2010 of the neural network, wherein values of the second hidden layer 2012 can be calculated based in the values of the first hidden layer 2011, etc.

In order to set the values $w^{(m,n)}_{i,j}$ for the edges, the neural network 2000 has to be trained using training data. E.g., training data comprises training input data and training output data (denoted as $t_i$). For a training step, the neural network 2000 is applied to the training input data to generate calculated output data. In some examples, the training data and the calculated output data comprise a number of values, said number being equal with the number of nodes of the output layer.

In some examples, a comparison between the calculated output data and the training data is used to recursively adapt the weights within the neural network 2000 (backpropagation algorithm). By way of example, the weights are changed according to

$$w'^{(n)}_{i,j} \; = \; w^{(n)}_{i,j} \; - \; \gamma \cdot \delta^{(n)}_j \cdot x^{(n)}_i$$

wherein $\gamma$ is a learning rate, and the numbers $\delta^{(n)}_j$ can be recursively calculated as

$$\delta^{(n)}_j \; = \; \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer, and

$$\delta^{(n)}_j \; = \; \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 2013, wherein f' is the first derivative of the activation function, and y(n+1)j is the comparison training value for the j-th node of the output layer 2013.

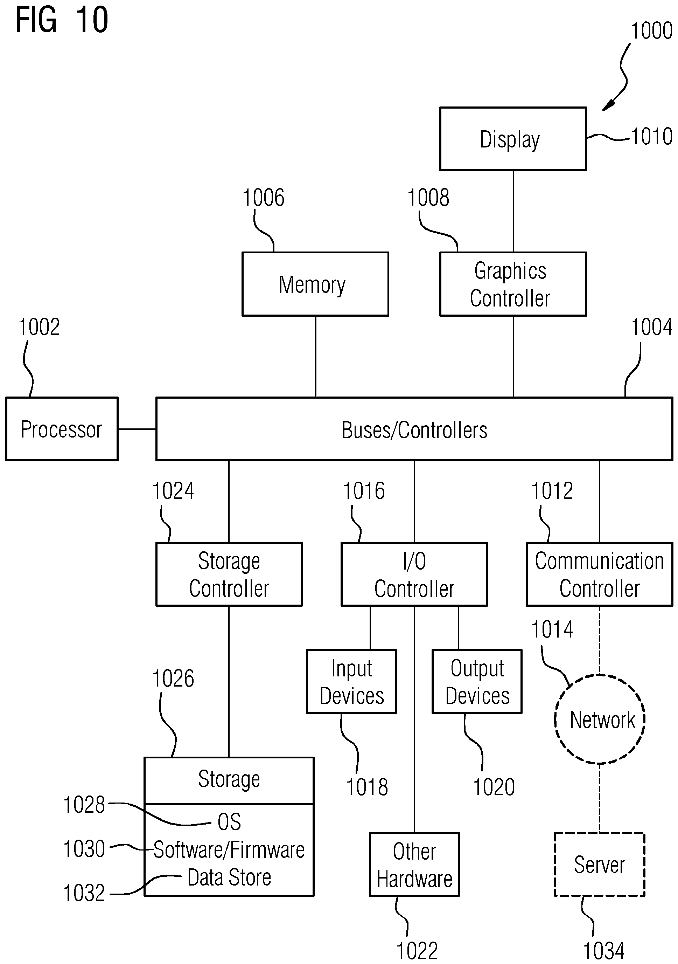

Fig. 10 depicts a block diagram of a data processing system 1000 (also referred to as a computer system) in which an embodiment can be implemented, for example, as a portion of a product system, and/or other system operatively configured by software or otherwise to perform the processes as described herein, e.g., as an embodiment of the above-mentioned chatbot. The data processing system 1000 may comprise, for example, the computer or IT system or data processing system 100 mentioned above. The data processing system depicted comprises at least one processor 1002 (e.g., a CPU) that may be connected to one or more bridges/controllers/buses 1004 (e.g., a north bridge, a south bridge). One of the buses 1004, for example, may comprise one or more I/O buses such as a PCI Express bus. Also connected to various buses in the depicted example may comprise a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures comprise IA-32, x86-64, and ARM processor architectures.

Other peripherals connected to one or more buses may comprise communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may comprise one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) comprising input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that comprises a touch screen that serves as both an input and display device. Further, it should be appreciated that some input devices (such as a laptop) may comprise a plurality of different types of input devices (e.g., touch screen, touch pad, keyboard). Also, it should be appreciated that other peripheral hardware 1022 connected to the I/O controllers 1016 may comprise any type of device, machine, or component that is configured to communicate with a data processing system.

Additional components connected to various busses may comprise one or more storage controllers 1024 (e.g., SATA). A storage controller may be connected to a storage device 1026 such as one or more storage drives and/or any associated removable media, which can be any suitable non-transitory machine usable or machine-readable storage medium. Examples comprise nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may comprise an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may comprise Microsoft Windows, Linux, UNIX, iOS, and Android operating systems. Also, examples of data stores comprise data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, comprising the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system, or part thereof that controls at least one operation, whether such a device is implemented in hardware, firmware, software, or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures comprise VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be comprised in a client device that communicates with the server (and/or a virtual machine executing on the server) through a wired or wireless network (which may comprise the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols comprise Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "comprise" and "comprise," as well as derivatives thereof, mean inclusion without limitation. The singular forms "a", "an" and "the" are intended to comprise the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is

"configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

**Claims**

1.  Computer-implemented method including:

    • receiving natural language input (120A) indicative of fetching data sets (122A, 122B) stored in at least two separate repositories (124A, 124B);
    • extracting at least two fetch parameters (126A, 126B) according to configurable parameter types (128A, 128B) from the received input (120A);
    • fetching the data sets (122A, 122B) corresponding to the respective, extracted fetch parameter (126A, 126B) from repositories (124A, 124B); and
    • storing the respective, fetched data set (122A, 122B) in a data storage (130).

2.  Computer-implemented method according to claim 1, further including:

    • determining that at least one aspect (126-I) of the respective, extracted fetch parameter (126) is invalid if the respective, extracted fetch parameter (126) does not comply with the configurable parameter types (128);
    • prompting a user to provide user input relating to the respective, invalid aspect (126-I) using natural language;
    • receiving natural language reply input (120B) relating to the respective, invalid aspect (126-I); and
    • extracting the respective fetch parameter (126) including a respective, valid aspect (126-V) relating to the previously invalid aspect (126-I) from the received reply input (120B).

3.  Computer-implemented method according to claim 1 or 2,
    wherein the configurable parameter types (128) characterize the name, the data type, and optionally a description of the respective fetch parameter (126).

4.  Computer-implemented method according to any one of the preceding claims, further including:

    • receiving a list of the available, separate repositories (124).

5.  Computer-implemented method according to claim 4, further including:

    • determining the respective configurable parameter type (128) for each repository (124) and optionally for each data set (122) stored in the respective repository (124).

6.  Computer-implemented method according to any one of the preceding claims, further including:

    • prompting a user to provide user input relating to a connection (132) to the respective repository (124) and/or to data sets (122) to be fetched using natural language;
    • receiving natural language reply input (120C) relating to the connection (132) to the respective repository (124) and/or to data sets (122) to be fetched using natural language; and
    • extracting the respective connection (132) from the received reply input (120C).

7.  Computer-implemented method according to any one of the preceding claims, further including:

    • receiving natural language input (120D) indicative of activating or deactivating the respective stored, fetched data set (122);
    • receiving natural language input (120E) indicative of processing one or more of the respective stored, fetched data sets (122); and
    • processing the one or more of the respective stored, fetched data set (122) only if the respective stored, fetched data set (122) is activated or not deactivated.

8. Computer-implemented method according to claim 7, wherein processing one or more of the respective stored, fetched data sets further includes:

• plotting the respective stored, fetched data set (122), optionally as a function of the same respective stored, fetched data set (122) and/or as a function of one or more other respective stored, fetched data sets (122); and
• creating one or more illustrations (134) or one or more video sequences of illustrations (134) from the plotted function(s).

9. Computer-implemented method according to any one of the preceding claims,
wherein the respective, fetched data set (122) relates to a detectable observable (136) of a respective device (138), such as an automation device of an automation system (140), wherein the method further includes:

• receiving documentation (142) relating to the respective, fetched data set (122) and/or the respective device (138),
wherein the documentation (142) characterizes at least one of device properties, device components, a device configuration, a device performance parameter, a device operating parameter, a device status parameter, a device condition parameter, or any combination thereof;
• identifying at least one aspect (142-122) of the received respective documentation (142) relating to the respective, fetched data set (122); and
• communicating the respective, fetched data set (122) and the related respective aspect (142-122) of the received respective documentation (142) to the user, e.g., via a display device (112).

10. Computer-implemented method according to claim 9, further including:

• identifying at least one discrepancy (144) between the respective, fetched data set (122) and the related respective aspect (142-122) of the received respective documentation (142); and
• communicating information (144-I) on the respective discrepancy (144) to the user, e.g., via a display device (112), and/or

causing to change the operation status of the respective device (138) or an automation system (140) including the respective device (138).

11. Computer-implemented method according to any one of the preceding claims, further including:

• storing a sequence of steps in the data storage (130);
• offering the respective sequence of steps to the user for selection; and
• executing the respective sequence of steps if selected by the user,

wherein the sequence of steps includes at least three of the following steps:

◦ fetching the data sets (122) corresponding to the respective, extracted fetch parameter (126) from repositories (124);
◦ determining the respective configurable parameter type (128) for each repository (124) and optionally for each data set (122) stored in the respective repository (124);
◦ processing one or more of the respective stored, fetched data sets (122) only if the respective stored, fetched data set (122) is activated or not deactivated;
◦ communicating the respective stored, fetched data set (122) and/or the processed, stored, fetched data set (122) to the user, e.g., via a display device (112);
◦ plotting the respective stored, fetched data set (122) as a function of the same respective stored, fetched data set (122) and/or as a function of one or more other respective stored, fetched data sets (122);
◦ creating one or more illustrations (134) or one or more video sequences of illustrations (134) from the plotted function(s).
◦ displaying the created respective illustration (134) or video sequence of illustrations (134) via a display device (112);
◦ communicating the respective, fetched data set (122) and the related respective aspect (142-122) of the received respective documentation (142) to the user, e.g., via a display device (112);

∘ communicating information (144-I) on the respective discrepancy (144) to the user, e.g., via a display device (112), and/or
∘ changing the operation status of the respective device (138) or an automation system (140) including the respective device (138).

12. Computer system (100, 118) arranged and configured to execute the steps of the computer-implemented method according to any one of the preceding claims.

13. Computer program product (162), including computer program code which, when executed by a computer system (100, 118), cause the computer system (100, 118) to carry out the method of one of the claims 1 to 11.

14. Computer-readable medium (160) including a computer program product (162) including computer program code which, when executed by a computer system (100, 118), cause the computer system (100, 118) to carry out the method of one of the claims 1 to 11.

FIG 1

# FIG 2

FIG 3

Internal Data Store

Processor    Memory    Application Software Component

EP 4 636 612 A1

FIG 4

FIG 5

EP 4 636 612 A1

FIG 6

FIG 7

EP 4 636 612 A1

FIG 8

FIG 9

# FIG 10

1000

Display ⌐1010

1006

1008

Memory

Graphics
Controller

1002

1004

Processor

Buses/Controllers

1024

1016

1012

Storage
Controller

I/O
Controller

Communication
Controller

1026

1014

Input
Devices

Output
Devices

Network

Storage

1028 — OS

1018

1020

1030 — Software/Firmware

1032 — Data Store

Other
Hardware

Server

1022

1034

Europäisches
Patentamt

European
Patent Office

Office européen
des brevets

# EUROPEAN SEARCH REPORT

**Application Number**

EP 24 17 1079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/104400 A1 (MAHINDRU RUCHI [US] ET AL) 28 March 2024 (2024-03-28) <br> * abstract * <br> * paragraph [0012] - paragraph [0019] * <br> * paragraph [0022] - paragraph [0037] * <br> * paragraph [0042] - paragraph [0046] * <br> * paragraph [0055] - paragraph [0063]; figures 2-4 * | 1-14 | INV. <br> G06F16/9032 |
| X | US 2009/204590 A1 (YASKIN STEVEN [US] ET AL) 13 August 2009 (2009-08-13) <br> * abstract * <br> * paragraph [0006] - paragraph [0008] * <br> * paragraph [0020] - paragraph [0023]; figure 1 * <br> * paragraph [0032] - paragraph [0034]; figures 3, 4 * <br> * paragraph [0043] - paragraph [0051]; figures 7-10 * | 1-14 | |
| A | Chen Zui ET AL: "Symphony: Towards Natural Language Query Answering over Multi-modal Data Lakes", <br> , <br> 8 January 2023 (2023-01-08), pages 1-7, XP93206108, <br> Retrieved from the Internet: URL:https://nantang.github.io/research/pubs/cidr2023.pdf <br> [retrieved on 2024-09-18] <br> * the whole document * | 1-14 | **TECHNICAL FIELDS SEARCHED (IPC)** <br><br> G06F |

The present search report has been drawn up for all claims

| Place of search | Date of completion of the search | Examiner |
|---|---|---|
| Berlin | 18 September 2024 | Barieux, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1079

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | Publication date | Patent family member(s) | Publication date |
|---|---|---|---|
| US 2024104400 A1 | 28-03-2024 | NONE | |
| US 2009204590 A1 | 13-08-2009 | NONE | |

EPO FORM P0459

For more details about this annex : see Official Journal of the European Patent Office, No. 12/82